Europäisches Patentamt

European Patent Office

Office européen des brevets

(11) Publication number: **0 283 210**
**A1**

(12) **EUROPEAN PATENT APPLICATION**

(21) Application number: 88302111.5

(22) Date of filing: **10.03.88**

(51) Int. Cl.4: **F16B 5/08** , B23K 9/20

(30) Priority: **13.03.87 US 25441**

(43) Date of publication of application:
**21.09.88 Bulletin 88/38**

(84) Designated Contracting States:
**AT BE CH DE ES FR GB IT LI LU NL SE**

(71) Applicant: **STEMCOR CORPORATION**
**The Standard Oil Company Headquarters**
**Building 200 Public Square**
**Cleveland Ohio 44114-2375(US)**

(72) Inventor: **Deren, Gary W.**
**295 Forbes Avenue**
**Tonawanda New York 14150(US)**

(74) Representative: **Scott, Susan Margaret et al**
**BP INTERNATIONAL LIMITED Patents &**
**Agreements Division Chertsey Road**
**Sunbury-on-Thames Middlesex TW16**
**7LN(GB)**

(54) **Welding studs and method for attaching welding studs.**

(57) A welding stud (110) comprising:
a threaded portion (112) and a welding terminal
portion (118) extending from the threaded portion,
characterized by a breakable connection (120) between the portions, whereby the welding terminal
portion can be broken from the threaded portion at
the completion of a welding operation.

A method of welding a stud to a first object and
for connecting a second object to the first object,
and an apparatus for this method, are described.

FIG. 9

EP 0 283 210 A1

## WELDING STUDS AND METHOD FOR ATTACHING WELDING STUDS

The invention relates to welding studs, to a method and apparatus for welding studs and, more particularly, to a method and apparatus for automatically welding studs and tightening fasteners in a series of steps that are conducted in a continuous sequence.

Stud welding has proven to be an effective technique for connecting objects to weldable workpieces made of materials such as mild steel, stainless steel, and aluminum. A good example of the use that can be made of stud welding is in the insulation of furnaces and kilns having metal walls. Typically, insulating modules employing ceramic fiber blankets or mats are secured to attachment hardware which then is secured to the inner walls of a furnace by attachment of studs previously welded to the furnace walls. Because the studs are strong and because they usually can be attached to the furnace walls without difficulty, they are preferred over other attachment techniques.

Various methods are known by which studs can be welded to workpieces such as furnace walls. In general, these methods involve placing the end of a stud adjacent the workpiece and directing an electric welding current through the stud. An electric arc is produced between the end of the stud and the workpiece which melts a portion of the stud and the workpiece, causing a pool of molten metal to be created. Upon plunging the end of the stud into the pool and terminating the flow of electric current, a weld will be created. Thereafter, a fastener, usually a nut, can be attached to the stud in order to secure an object to the workpiece.

Although stud welding has proven to be a desirable technique for connecting objects to each other, certain problems must be dealt with if strong welds are to be obtained consistently on a production basis. One such problem relates to preparing the surface of the workpiece prior to commencing the welding operation. If paint, corrosion, or other surface defects are present, the integrity of the weld can be compromised. It usually is necessary to prepare the surface by grinding, sandpapering, or in some way providing a contaminant-free surface at the initiation of the welding operation. Representative approaches to the problem of properly preparing the surface to be welded are shown by U.S. Patent Nos. 4,074,103 to Shoup et al.; 3,488,466 to Poupitch; and 3,696,227 to Wenrich et al.

Another problem that must be addressed in a stud welding operation is controlling the spattering of molten metal that accompanies the formation of a pool of molten metal. Additional problems relate to adequately controlling the strength and duration of the welding current, properly spacing the tip of the stud from the surface of the workpiece, coordinating the termination of welding current and plunging of the stud into the pool of molten metal, and controlling the movement of the stud so that it plunges into the pool at a correct speed and with a correct amount of force. Representative approaches to the foregoing problems are shown by U.S. Patent Nos. 3,496,325 to Glorioso; 4,130,751 to Gordon; and 4,297,560 to Netzsch.

After the stud has been welded to the workpiece, it is necessary to position the object to be connected to the workpiece relative to the stud, and thereafter to tighten a fastener, usually a nut, against the object. Techniques are known by which the fastener is prethreaded onto the stud, and the object is positioned relative to the workpiece before the welding operation is commenced. Other techniques are known in which the object and fastener are secured to the stud after the welding operation is completed. Representative techniques for attaching objects to workpieces and attaching fasteners to studs are shown in U.S. Patent Nos. 3,706,870 to Sauder et al.; 3,819,468 to Sauder et al.; and 4,032,742 to Kendrick et al.

Although the foregoing problems have been dealt with satisfactorily in one way or another, certain concerns remain. In order for the various operations referred to to be accomplished, a number of different procedures utilizing a number of different pieces of equipment, are required. These factors increase the expense of the stud welding process, and they also increase the time needed to satisfactorily install the stud and secure an object to the workpiece. In addition, the various stud welding techniques known in the art do not provide an effective way in which the integrity of the stud weld can be checked. Typically, a stud will be hammered over at the beginning of a stud welding operation and, if the stud remains attached to the workpiece, then it will be assumed that subsequent studs will be welded satisfactorily. Unfortunately, no inexpensive, non-destructive test is known for checking the integrity of welds on a production basis.

The present invention provides a welding stud comprising: a threaded portion and a welding terminal portion extending from the threaded portion, characterised by a breakable connection between the portions, whereby the welding terminal portion can be broken from the threaded portion at the completion of a welding operation.

Preferably the breakable connection is a region of reduced cross-section at the connection between the threaded portion and the welding terminal portion.

Preferably the welding terminal portion is configured to engage a rotable driving member in driving relationship.

In a preferred embodiment of the stud according to the invention, the end of the threaded portion opposite the breakaway connection includes abrading means for abrading the surface to which the threaded portion is to be welded. The means may for example be a spade-like tip, a drill point-like tip, or an abrasive substance adhered to the threaded portion.

The present invention also provides a new and improved method and apparatus for welding studs having advantages regarding the speed with which studs can be welded and by which the integrity of the welds can be checked. The method according to the invention employs a stud having a threaded portion with a welding terminal portion extending therefrom, and a fastener threadedly engaged with the threaded portion. The method includes the steps of positioning the end of the threaded portion adjacent a first object, directing an electric welding current through the stud to weld the threaded portion to the first object, terminating the flow of electric current to the stud, breaking the welding terminal portion away from the threaded portion, placing a portion of the second object around the threaded portion, tightening the fastener against the second object, and withdrawing the welding terminal portion. The method according to the invention also contemplates rotating the stud about its longitudinal axis prior to directing electric current through the stud in order to spot face, or abrade, the surface of the first object. The method according to the invention also contemplates placing a portion of the second object around the threaded portion prior to directing an electric current through the stud so that, in effect, the second object can be connected to the first object as part of the welding process.

A preferred embodiment of the invention provides a method of welding a stud to a first object and for connecting a second object to the first object, the stud including a threaded portion and a welding terminal portion extending from said threaded portion, and a fastener threadedly engaged with the threaded portion, characterized by the steps of:

positioning the end of the threaded portion that is opposite the terminal portion adjacent to the first object so that a portion of the second object is around the threaded portion;

contacting the first object with the end of the threaded portion opposite the terminal portion and withdrawing the threaded portion from said first object by a predetermined distance;

conducting an electric current through the stud to weld the threaded portion to the first object;

terminating the flow of electric current through the stud and contemporaneously pushing the end of the threaded portion opposite the terminal portion against the first object;

breaking the welding terminal portion away from the threaded portion;

tightening the fastener against the second object; and

withdrawing the welding terminal portion.

Preferably the step of breaking is accomplished by rotating the welding terminal portion about the longitudinal axis of the stud.

Preferably the method involves abrading the surface of the first object prior to conducting an electrical current by engaging the end of the threaded portion opposite the terminal portion with the surface of the first object.

Apparatus according to the invention includes a chuck means for holding the welding terminal portion, advancing means for moving the welding terminal portion toward and away from the first object, electrical conducting means for directing an electric current through the stud to weld the threaded portion to the first object, and rotating means for (1) rotating the welding terminal portion relative to the threaded portion after welding the threaded portion to the first object and (2) rotating the fastener relative to the threaded portion to tighten the fastener against the second object after welding the threaded portion to the first object. The foregoing apparatus is constructed and arranged such that the steps of the method according to the invention may be carried out automatically and in a continuous sequence. Various components of the apparatus, including the chuck means, rotating means, and the welding stud itself are important features of the invention.

Because the welding terminal portion of the stud is broken away from the threaded portion after the threaded portion has been welded to the first object, the invention provides a non-destructive reliability test. That is, the welding terminal portion is connected to the threaded portion by a region of reduced cross-sectional area. The cross-sectional area of this region is selected such that, for a welding stud of a given material, a pre-determined torque level will be required to break the welding terminal portion away from the threaded portion. The pre-determined torque level thus provides a non-destructive reliability test at the conclusion of each welding operation. A second test of weld reliability is provided upon subsequent torquing of the threaded fastener relative to the previously welded threaded portion.

The foregoing, and other features and advantages of the invention are described in more detail in the accompanying drawings, specification, and claims.

## Description of the Drawings

Figure 1 is a side elevational view of apparatus for welding studs in the form of a welding gun, portions of the gun being broken away and removed for clarity of illustration;

Figure 2 is an end elevational view of the gun of Figure 1;

Figure 3 is an enlarged view of a portion of the gun of Figure 1, showing a welding stud and a drive tube attached thereto;

Figure 4 is a side elevational view of a chuck according to the invention used to hold one end of a welding stud;

Figure 5 is a cross-sectional view of a drive member according to the invention taken along a plane indicated by line 5-5 in Figure 1;

Figure 6 is a view similar to Figure 5 taken along a plane indicated by line 6-6 in Figure 1;

Figure 7 is a cross-sectional view of a welding stud and drive tube according to the invention taken along a plane indicated by line 7-7 in Figure 3;

Figure 8 is a view similar to Figure 7 taken along a plane indicated by line 8-8 in Figure 3;

Figure 9 is an elevational view of a welding stud according to the invention;

Figure 10 is an enlarged view of the end of an alternative embodiment of a welding stud according to the invention;

Figure 11 is a side elevational view of the threaded portion shown in Figure 10;

Figure 12 is a view similar to Figure 10, showing an alternative embodiment of the end of the threaded portion;

Figure 13 is a view similar to Figure 1C, showing another alternative embodiment of the end of the threaded portion;

Figure 14 is a cross-sectional view of a welding stud and drive tube according to the invention at the start of abrading a portion of a first object;

Figure 15 is a view similar to Figure 14, showing the welding stud being withdrawn from the surface of the first object at initiation of a welding operation;

Figure 16 is a view similar to Figure 15, showing the welding stud being plunged into a pool of molten metal;

Figure 17 is a view similar to Figure 16, showing the welding terminal portion of the welding stud being broken away from the now-welded threaded portion;

Figure 18 is a view similar to Figure 17, showing the drive tube being rotated to advance a fastener relative to the threaded portion;

Figure 19 is a view similar to Figure 18 showing the drive tube and the broken away welding terminal portion being withdrawn;

Figure 20 is a view similar to Figure 14 showing an alternative technique for positioning an arc shield;

Figure 21 is a view similar to Figure 3 showing an alternative embodiment of a welding stud, fastener, and drive mechanism for the stud and fastener; and

Figure 22 is a cross-sectional view of the embodiment of Figure 21, taken along a plane indicated by line 22-22 in Figure 21.

## Description of the Preferred Embodiment

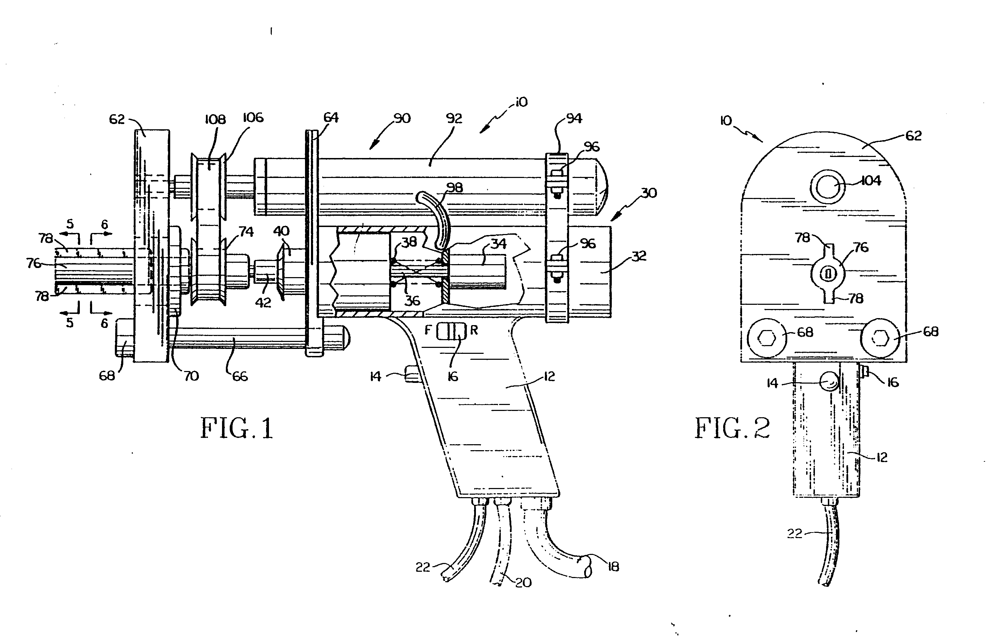

Referring to Figures 1 and 2, apparatus for welding a stud to a first object and for connecting a second object to the first object is indicated generally by the reference numeral 10. The apparatus 10 will be referred to herein for convenience as a welding gun. The gun 10 has a pistol grip-type handle 12 from which trigger switch 14 projects. A control switch 16 is disposed on one side of the handle 12. The control switch 16 has three positions: forward (position "F"), reverse (position "R"), and weld (illustrated in Figure 1). Cables 18, 20, 22 extend from the bottom of the handle 12. The cable 18 is connected to a source of welding current, the cable 20 is connected to an external timer circuit, and the cable 22 is connected to a source of 110 volt alternating circuit.

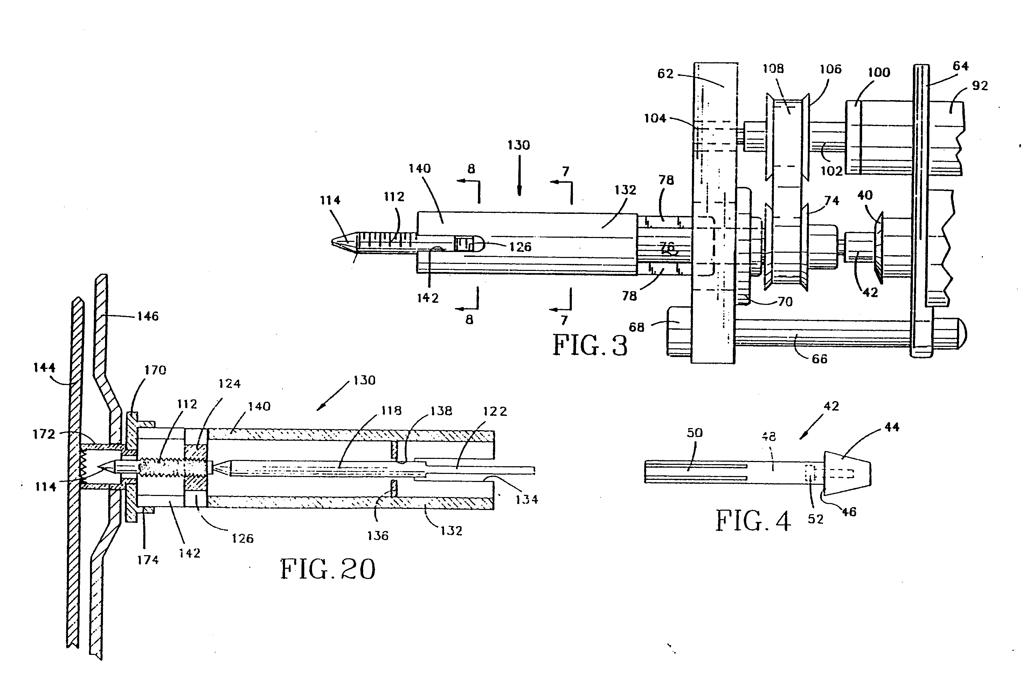

A body portion 30 is connected to the handle 12 and is disposed within a generally cylindrical housing 32. Welding circuitry (not shown) is contained within the housing 32 for receiving electrical welding current from the cable 18 and directing it through a welding stud to be described subsequently. A solenoid 34 is disposed within the housing 32 and includes a forwardly extending plunger 36 about which a spring 38 is disposed. A collar 40 is connected to the plunger 36 and extends outwardly of the housing 32 at the forward end of the body portion 30. A chuck 42 (see Figure 4) is disposed within the collar 40 and extends forwardly thereof. The chuck 42 includes an enlarged portion 44 having a frusto-conical taper. The forwardmost surface 46 of the portion 44 is smooth and provides a means by which the chuck 42 can be constrained by the collar 40 for rotational movement, but not axial movement. An elongate member 48 extends forwardly of the surface 46, which elongate member 48 includes a plurality of fingers 50. The elongate member 48 is hollow and includes a screw 52 at its innermost end. The fingers 50 are flexible enough to be spread apart upon the insertion of a welding stud into the member 48, so as to thereby tightly grip the welding stud. The position of the head of the screw 52 can be adjusted by the operator so as to control the extent to which the welding stud fits into the member 48. The spring 38 is arranged relative to the plunger 36 such that the spring 38 constantly tends to urge the plunger 36 and, hence, the chuck 42, to the left as viewed in Figure 1.

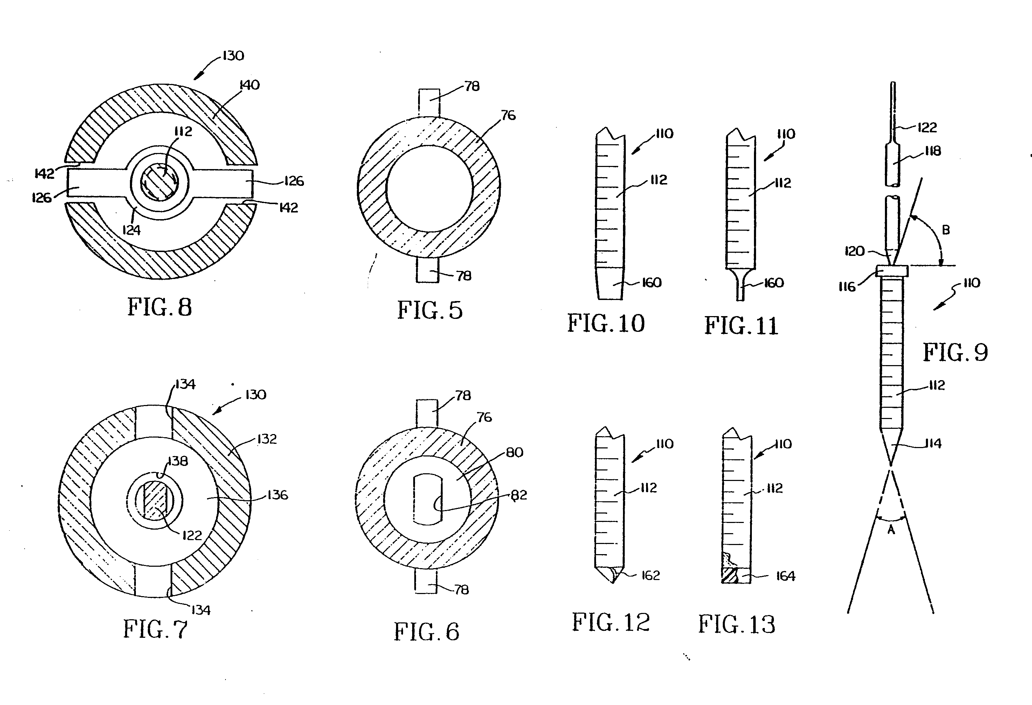

The gun 10 also includes support structure 60 for holding and rotating welding studs. The support structure 60 includes a footpiece block 62 disposed forwardly of the body portion 30. The footpiece block 62 is connected to the body portion 30 by means of a face place 64 and bolt-like legs 66 having enlarged heads 68 adapted to receive an allen wrench. A bearing 70 is carried by the footpiece block 62, which bearing includes a hollow stub shaft 72 extending toward the body portion 30. The stub shaft 72 carries a pulley 74. The stub shaft 72 receives the member 48 for relative rotational and axial movement therein. A hollow drive element 76 is supported by the bearing 70 and extends forwardly of the foot piece block 62. Referring particularly to Figure 5, the forwardmost portion of the drive element 76 is hollow and includes a pair of opposed splines 78. Referring particularly to Figure 6, an insert 80 is disposed within that portion of the drive element 76 located adjacent the footpiece block 62. The insert 80 includes an opening 82 having flattened, opposed sidewalls. The insert 80 is constructed of an electrically non-conductive material. The insert 80 can be held within the drive element 76 by a variety of techniques, but epoxy adhesive is preferred.

A drive motor 90 is disposed within a housing 92 and is mounted atop the body portion and is connected thereto by the face plate 64 and a bracket 94 having fasteners 96. An electrical cable 98 extends between the housings 32, 92 and establishes an electrical connection between the drive motor 90 and cable 22. An adjustable torque clutch is connected to drive motor 90 and disposed forward of housing 92. A drive shaft 102 extends forwardly of the clutch 100 and is fitted at its forwardmost end into a bearing 104. The bearing 104 is fitted tightly within an opening in the footpiece block 62. A pulley 106 is disposed about the drive shaft 102. A belt 108 is fitted about the pulleys 74, 108 and connects them in driving relationship. As will be apparent from an examination of Figures 1 and 2, the footpiece block 62, face plate 64, and bracket 94, the legs 66, and the bearings 70, 104 cooperate to connect the body portion 30 and the drive motor 90 rigidly together, and these elements also cooperate to provide a strong, reliable technique for rotating the drive element 76 and for rotating the chuck 42 and moving it axially.

Referring particularly to Figure 9, a welding stud 110 is usable as part of the invention as illustrated. The welding stud 110 includes a threaded portion 112 at one end. The threaded portion 112 includes a pointed end portion 114 having sides tapering to a point as indicated by the angle A. The angle A can be anywhere from 10° to 170°, but preferably is approximately 30°. The other end of the threaded portion 112 includes an enlarged shoulder portion 116. The welding stud 110 also includes an elongate welding terminal portion 118. The welding terminal portion 118 is connected to the shoulder portion 116 by a section 120 of reduced cross-sectional area. In the embodiment illustrated in Figure 9, the portion 120 has straight side walls that taper at an angle B for attachment to the shoulder portion 116. In the preferred embodiment, the angle B is 60°, and the diameter of the portion 120 at the point of intersection with the shoulder portion 116 is approximately 0.070 inch. The other end of the welding terminal portion 118 includes, a portion 122 having flattened side walls. The dimensions of the end portion 122 are selected such that a driving relationship will be established with the side walls 82 of the insert 80. It is intended that the portion 122 will be able to be moved axially of the insert 80, but rotation of the insert 80 will cause the welding stud 110 to be rotated about its longitudinal axis.

A fastener 124 in the form of a nut having wings 126 is threaded about the threaded portion 112. Referring particularly to Figures 3, 7, 8 and 14, the welding stud 110 is disposed within a hollow, elongate drive tube 130. The drive tube 130 includes a first end 132 having a pair of opposed, axially extending slots 134 formed therein. An insert 136 having a centrally located opening 138 is secured within the tube 130. The welding terminal portion 118 is adapted to be fitted through the opening 138. The inner diameter of the first end 132, and the size and shape of the slots 134 are selected such that the drive tube 130 can be fitted over the drive element 76 and a driving relationship will be established between the splines 78 and the slots 134.

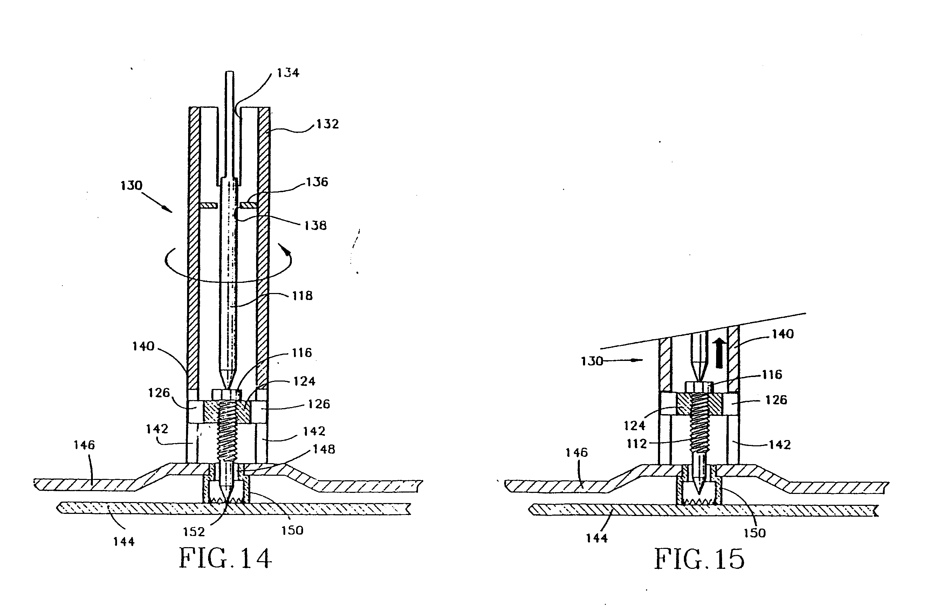

The drive tube 130 includes a second end portion 140 similar in size and shape to the first end portion 132. The second end portion 140 includes a pair of opposed, axially extending slots 142. As can be seen in Figures 3 and 14, the slots 142 are of a size and shape such that the wings 126 can be fitted therein to establish a driving relationship between the drive tube 130 and the fastener 124. As will be apparent from an examination of Figures 3 and 14, relative rotational movement between the welding stud 110 and the drive tube 130 will cause the fastener 124 to be moved along the threaded portion 112. It will be noted that although the slots 134, 142 extend axially along the drive tube 130, the slots 134, 142 are positioned 90° from each other about the circumference of the drive tube 130.

Referring to Figure 14, the welding stud 110 is about to be welded to a first object 144. Typically, the object 144 will be a workpiece such as a flat steel plate. A second object 146 having an opening 148 formed therein is positioned adjacent the first object 144. A ceramic arc shield 150 is fitted within the opening 148 and is in contact with the workpiece 144. The arc shield 150 includes a plurality of serrated openings 152 at that portion of the arc shield 150 in contact with the workpiece 144. The arc shield 150 concentrates the energy of the welding arc in a small area and prevents spattering of molten metal. In effect, the arc shield 150 constrains the formation of a pool of molten metal, thereby producing uniform welds.

## Operation

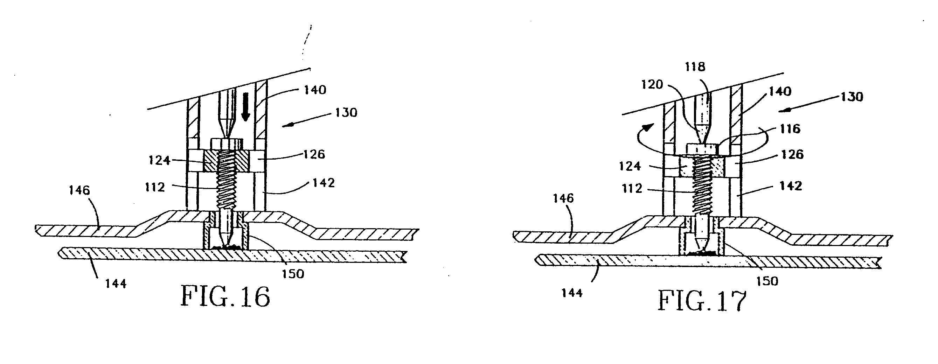

Referring particularly to Figures 14-19, operation of the apparatus 10 will be described as follows.

1. The arc shield 150 is fitted within the opening 148 and the second object 146 is positioned adjacent the first object 144 such that the serrated openings 152 are in contact with the surface of the first object 144. Although prepositioning of the second object relative to the first object in this manner represents an extremely effective technique for connecting the first and second objects to each other, it also is possible for the stud 110 to be welded to the first object 144, and for a portion of the second object 146 to be disposed about the stud 110 after it has been welded in place.

2. The nut 124 is threaded onto the threaded portion 112 until the shoulder 116 is encountered.

3. The drive tube 130 is placed over the welding stud 110 until the slots 142 engage the flanges 126.

4. The flattened side walls 122 of the welding terminal portion 118 are inserted into the drive element 76, through the opening 82 in the insert 80, and into the member 48. The position of the screw 52 previously will have been adjusted by trial and error so that the threaded portion 112 extends beyond the second end 140 of the drive tube 130 a desired amount. During the stud insertion process, the slots 134 are aligned with the splines 78 and the first end 132 is pushed over the drive member 76 until the first end 132 engages the footpiece block 62.

5. The control switch 16 is placed in the reverse position, the welding stud 110 and the drive tube 130 are positioned as shown in Figure 14, and the switch 14 is depressed. At this point, the drive motor 90 will be energized in a counterclockwise direction. Torque will be transmitted to the drive tube 130 through the drive element 76 and the other components connecting the drive element 76 and the motor 90. Upon counterclockwise rotation of the drive tube 130 as shown in Figure 14, the slots 142 will tighten the nut 124 against the shoulder 116 which, in turn, will cause the pointed tip 114 to rotate in a counterclockwise direction against the workpiece 144. This action of the tip 114 will cause a bright spot to be formed on the workpiece 144 so as to enable a good welding arc to be created.

6. The control switch 16 is placed in the weld position and the trigger switch 14 again is depressed. At this point, the timing circuit is activated. As part of this process, the solenoid 34 is activated such that the chuck 42 and, hence, the welding stud 110 are retracted a predetermined distance from the surface of work piece 144. When solenoid 34 begins to move toward its retracted position, welding circuit contacts are closed resulting in a flow of electrical current being directed through the welding stud 110. An arc is established between the end of the tip 114 and the workpiece 144. Heat generated by the arc melts both the end of the tip 114 and a portion of the workpiece 144, thus causing a pool of molten metal to form.

7. After a predetermined period of time has passed as determined by the timing circuit, electrical current flowing to the solenoid 34 is stopped, thereby causing the solenoid's magnetic field to collapse. Simultaneously, the welding contacts are opened, thereby ending the flow of electrical welding current. Also simultaneously, the spring 38 acts on the plunger 36, moving the plunger 36, the chuck 42, and the welding stud 110 toward the workpiece 144. The end of the threaded portion 112 is plunged into the molten pool, which thereafter fuses and solidifies so as to effect a weld between the threaded portion 112 and the workpiece 144.

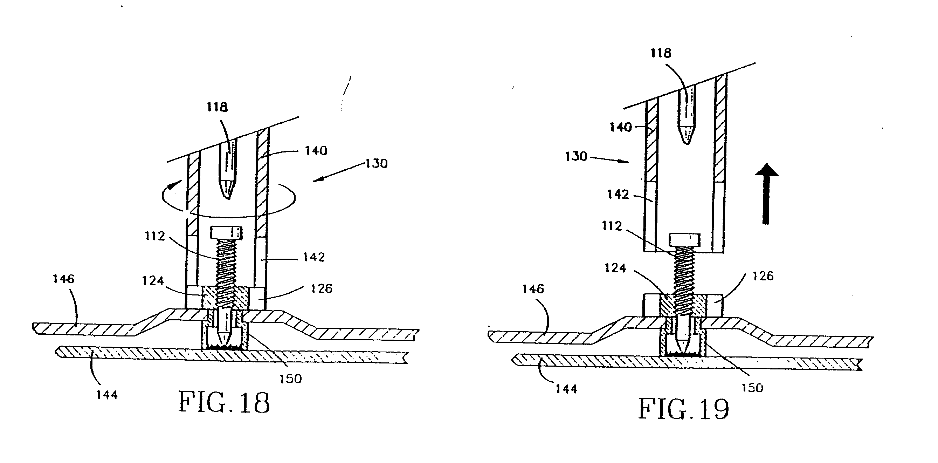

8. Referring to Figure 17, the control switch 16 is placed in the forward position and the trigger switch 14 again is depressed. The drive motor is activated such that the drive tube 130 and the welding stud 110 are rotated in a clockwise direction. Because the threaded portion 112 now is welded to the workpiece 144, torque applied to the welding terminal portion 118 through the drive element 74 will cause the welding terminal portion 118 to break away from the shoulder 116 in the region of reduced cross-sectional area 120. The torque required to break away the welding terminal portion 118 in effect provides a non-destructive reliability test of the strength of the weld that has just been formed. Clockwise rotation of the drive tube 130 also causes the nut 124 to be advanced along the threaded portion 112 toward the workpiece 144.

9. Referring now to Figure 18, continued clockwise rotation of the drive tube 130 advances the nut 124 to the point where it engages the second object 146, thereby tightening it relative to workpiece 144. Clutch 100 limits the torque applied to nut 124 to an adjustable, predetermined value. Although arc shield 150 is shown intact, it is expected that the shield 150 most likely will be broken upon being compressed between the workpiece 144 and the second object 146.

10. Referring now to Figure 19, at the conclusion of the welding and tightening process, the broken away welding terminal portion 118 and the drive tube 130 can be withdrawn. Upon attaching another welding stud 110 and drive tube 130 to the drive element 76, another stud welding operation can be carried out elsewhere.

Alternative Embodiments

Referring to Figures 10-13, alternative embodiments of the welding stud 110 are illustrated. In the embodiment shown in Figures 10 and 11, a spade-like tip 160 is provided. In Figure 12, a drill point-like tip 162 is provided. In Figure 13, an abrasive portion 164 is glued to the end of a flat-bottomed threaded portion 112. The embodiments illustrated in Figures 10-13 represent alternate techniques by which abrading, or spot facing, of the workpiece 144 can be accomplished. The embodiment illustrated in Figure 12 is particularly useful in drilling through a backup lining, membrane, or coating that may previously have been placed between the workpiece 144 and the second object 146.

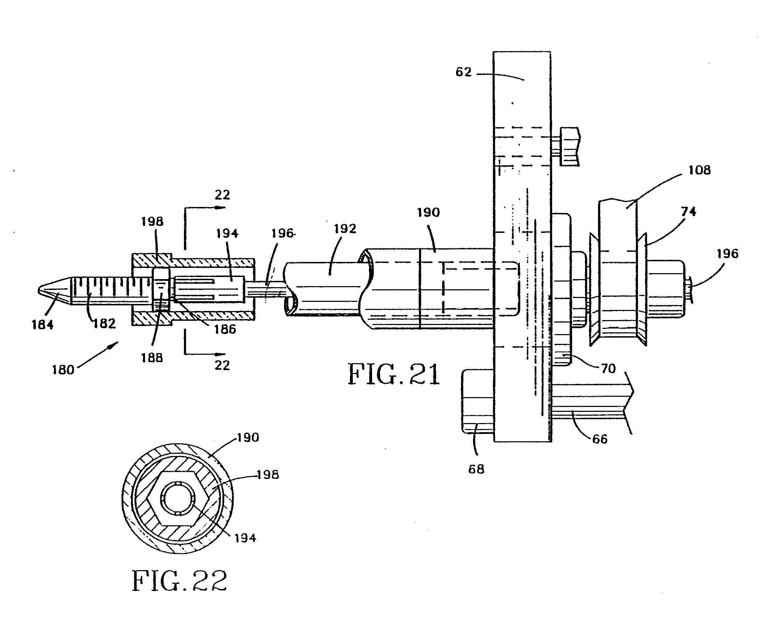

Referring to Figure 20, an alternative technique for connecting an arc shield to the drive tube 130 is shown. In the embodiment illustrated in Figure 20, the welding stud 110, drive tube 130, and all other components of the apparatus 10 remain unchanged. However, the second end 140 of the drive tube 130 is closed by a bushing 170. An arc shield 172 substantially similar in size and shape to the arc shield 150 is disposed within a centrally located opening 174 formed in the bushing 170. The most significant difference between the arc shields 150, 172 is that the arc shield 172 carries its outer diameter up to the bushing 170, rather than up to the opening formed in the second object 146. In effect, the opening formed in the second object 146 is larger such that the arc shield 172 fits entirely through it. The arc shield is held in place within the opening 174 by means of an epoxy adhesive.

Because the arc shield 172 is secured to the bushing 170, the various components comprising the welding stud 110, drive tube 130, and so forth can be assembled as a unit. Additionally, because the bushing 170 is assembled to the drive tube 130, alignment between the shield 172 and the welding stud 110 is assured. Additionally, because the shield 172 is carried by the drive tube 130 and is not attached to the second object 146, the shield 172 and the remaining components of the apparatus 10 can be positioned in different positions relative to the second object 146.

Referring now to Figures 21 and 22, an alternative embodiment of a welding stud, fastener, and drive mechanism are illustrated. In the embodiment illustrated in Figures 21 and 22, a welding stud 180 is illustrated. The welding stud 180 includes a threaded portion 182, a pointed tip 184, and a shoulder 186. A fastener 188 in the form of a hex nut is threaded onto the threaded portion 182.

A hollow fiberglass guide tube 190 is rigidly secured to the footpiece block 62 and extends outwardly therefrom. A hollow steel tube 192 is disposed within the tube 190. A female chuck 194 similar in size and shape to the chuck 42 is disposed at the end of the steel tube 192 and is connected to the chuck 42 by means of a chuck extension 196 extending through the steel tube 192. A socket 198 is diposed about the end of the steel tube 192 and is rigidly secured thereto.

In operation, the fastener 188 is prethreaded onto the welding stud 182 until the shoulder 186 is encountered. The shoulder 186 is inserted into the female chuck 194 with the hex nut 188 engaging the socket 198 in driving relationship. As will be apparent from an examination of Figures 21 and 22, counterclockwise rotation of the tube 192 will cause the tip 184 to abrade the surface of the first object. Retraction of the chuck 42 will cause the chuck 194 and, hence, the stud 180 to be withdrawn from the surface of the first object, whereby a welding arc can be established. After the stud 180 has been welded to the first object 144 as described previously, the steel tube 192 can be rotated clockwise, whereupon the socket 198 will cause the nut 188 to be advanced relative to the threaded portion 182 toward the workpiece 144.

Although the invention has been described in its preferred form with a certain degree of particularity, it will be apparent that various changes and modifications can be made without departing from the true spirit and scope of the invention as hereinafter claimed. It is expected that the patent will cover all such changes and modifications. It also is intended that the patent shall cover, by suitable expression in the appended claims, whatever features of patentable novelty exist in the invention disclosed.

## Claims

1. A welding stud (110) comprising:
a threaded portion (112) and a welding terminal portion (118) extending from the threaded portion, characterized by a breakable connection (120) between the portions, whereby the welding terminal portion can be broken from the threaded portion at the completion of a welding operation.

2. The welding stud of claim 1 characterized in that the breakable connection is a region of reduced cross-section at the connection between the threaded portion and the welding terminal portion.

3. The welding stud of claim 1 wherein the welding terminal portion is configured to engage a rotatable driving member in driving relationship.

4. The welding stud of claim 1 wherein the end of the threaded portion opposite the breakaway connection includes abrading means for abrading the surface to which the threaded portion is to be welded.

5. The welding stud of claim 4 wherein the abrading means is a spade-like tip.

6. The welding stud of claim 4 wherein the abrading means is a drill point-like tip.

7. The welding stud of claim 4 wherein the abrading means is an abrasive substance adhered to the threaded portion.

8. A method of welding a stud to a first object and for connecting a second object to the first object, the stud including a threaded portion and a welding terminal portion extending from said threaded portion, and a fastener threadedly engaged with the threaded portion, characterized by the steps of:
positioning the end of the threaded portion that is opposite the terminal portion adjacent to the first object so that a portion of the second object is around the threaded portion;
contacting the first object with the end of the threaded portion opposite the terminal portion and withdrawing the threaded portion from said first object by a predetermined distance;
conducting an electric current through the stud to weld the threaded portion to the first object;
terminating the flow of electric current through the stud and contemporaneously pushing the end of the threaded portion opposite the terminal portion against the first object;
breaking the welding terminal portion away from the threaded portion;
tightening the fastener against the second object; and
withdrawing the welding terminal portion.

9. The method of claim 8 wherein the step of breaking is accomplished by rotating the welding terminal portion about the longitudinal axis of the stud.

10. The method of claim 8 characterized by abrading the surface of the first object prior to conducting an electrical current by engaging the end of the threaded portion opposite the terminal portion with the surface of the first object.

11. A method of welding a stud to a first object and for connecting a second object to the first object, which comprises positioning a stud having a threaded portion with a welding terminal portion extending therefrom, and a fastener threadedly engaged with the threaded portion, such that the end of the threaded portion is adjacent a first object, directing an electric welding current through the stud to weld the threaded portion to the first object, terminating the flow of electric current to the stud, breaking the welding terminal portion away from the threaded portion, placing a portion of the second object around the threaded portion, tightening the fastener against the second object, and withdrawing the welding terminal portion.

12. Apparatus including a chuck means for holding the welding terminal portion of a stud having a threaded portion with a welding terminal portion extending therefrom, and a fastener threadedly engaged with the threaded portion, advancing means for moving the welding terminal portion of the stud toward and away from the first object, electrical conducting means for directing an electric current through the stud to weld the threaded portion to the first object, and rotating means for (1) rotating the welding terminal portion relative to the threaded portion after welding the threaded portion to the first object and (2) rotating the fastener relative to the threaded portion to tighten the fastener against the second object after welding the threaded portion to the first object.

0 283 210

FIG.1

FIG.2

0 283 210

FIG.3

FIG.20

FIG.4

FIG. 9

FIG. 11

FIG. 13

FIG. 10

FIG. 12

FIG. 5

FIG. 6

FIG. 8

FIG. 7

FIG.14

FIG.15

FIG.16

FIG.17

0 283 210

FIG.18

FIG.19

0 283 210

FIG.21

FIG.22

0 283 210

## DOCUMENTS CONSIDERED TO BE RELEVANT

EP 88302111.5

| Category | Citation of document with indication, where appropriate, of relevant passages | Relevant to claim | CLASSIFICATION OF THE APPLICATION (Int. Cl.4) |
|---|---|---|---|
| X | AT - B - 186 091 (GASACCUMULATOR) <br> * Fig. 6 * | 1,2 | F 16 B 5/08 <br> B 23 K 9/20 |
| A | | 8,11 | |
| A | DE - B2 - 2 739 867 (COMAIR) <br> * Fig. 1-4 * | 1,2 | |
| D,A | US - A - 4 074 103 (SHOUP) <br> * Fig. 3 * | 12 | |
| A | DE - A - 2 206 537 (MOLYNEUX) <br> * Totality * | | |

TECHNICAL FIELDS SEARCHED (Int. Cl.4)

B 23 K
F 16 B

The present search report has been drawn up for all claims

| Place of search | Date of completion of the search | Examiner |
|---|---|---|
| VIENNA | 30-06-1988 | REININGER |